# EUROPÄISCHE PATENTSCHRIFT

(11) **EP 0 904 183 B1**
(45) Veröffentlichungstag und Bekanntmachung des Hinweises auf die Patenterteilung: **07.11.2001**
(21) Anmeldenummer: 97918099.9
(22) Anmeldetag: 02.04.1997
(51) Int. Cl.: B29B 7/52, B29C 47/12

(54) **EXTRUSIONSKOPF MIT MISCHEINRICHTUNG UND EINSTELLBAREM SCHEREFFEKT**
EXTRUSION HEAD WITH MIXING DEVICE AND ADJUSTABLE SHEAR EFFECT
TETE D'EXTRUSION AVEC DISPOSITIF DE MELANGE ET EFFET DE CISAILLE REGLABLE

(30) Priorität: 16.04.1996 DE 19614894
(43) Veröffentlichungstag der Anmeldung: 31.03.1999
(73) Patentinhaber: Hasse, Hartmut, 25486 Alveshole (DE)
(72) Erfinder: Hasse, Hartmut, 25486 Alveshole (DE)
(86) Internationale Anmeldenummer: EP9701653
(87) Internationale Veröffentlichungsnummer: WO9738837

(56) Entgegenhaltungen:
- EP-A- 0 165 218
- PLASTICS ENGINEERING, Bd. 50, Nr. 2, 1.Februar 1994, Seiten 19-23, XP000434110 SMITH D ET AL: "SPECIFYING A TOTAL GEAR PUMP SYSTEM"

## Beschreibung

Die Erfindung betrifft einen Extrusionskopf zum Mischen, Homogenisieren und Temperieren der ihm zugeführten Mischung aus dem vorgeschalteten Extruder. Der Mischungsstrom umfließt den oberen Rotor und füllt alle Zahnlücken der Rotoren. Durch den vorbestimmten Strömungskanal wird der untere Rotor in Rotation gebracht. Der Mischungsstrom wird durch einen Damm reguliert. Das in den Außenbereichen des unteren Rotors mitgeführte Material wird wieder zurückgeführt und wird durch den oberen unterteilten Rotor in den Außenbereichen axial zur Mitte gequetscht und hier in den Förderstrom eingemischt, um dann wiederum zum Austritt des Extrusionskopfes zu strömen. Durch die Rotorgeometrie kann der Scher- und Mischeffekt vorbestimmt werden.
Für den einstellbaren Schereffekt ist der Rotor angetrieben und kann somit den Mischeffekt und verbunden mit einer hohen Schergeschwindigkeit die Ausgangstemperatur stark erhöhen und einen Vulkanisationsvorgang auslösen.Ein Extrusionskopf mit Schereffekt zum Erreichen einer vorbestimmten Temperatur für Elastomere ist bekannt und im Einsatz. Ein Mischeffekt ist durch einen solchen bekannten Scherkopf nicht zu erreichen. Die Scherkopftechnologie ist kostenintensiv in der Anschaffung und hat einen relativ hohen Energieverbrauch. Des weiteren sind Kombinationen von Extruder mit vorgeflanschten Zahnradpumpen bei Kunststoff und Gummiverarbeitern im Einsatz, um ein im engen Toleranzfeld gleichmäßigens pulsationsarmes Endprodukt zu erzielen. Auch hier ist ein Mischeffekt nicht zu erreichen.
Des weiteren zeigt die Druckschrift DE3024552A1 ein tangierendes und mit unterschiedlichen Umfangsgeschwindigkeiten arbeitendes System mit Rakeln in einen offenen Trog zum Austragen von Schmelzen.
Druckschrift DE4114265A1 zeigt ein Zahnradsystem im Trog zum Aufschmelzen von Kunststoffgranulat oder Flocken ,um dann mit dem Zahnradsystem ausgepreßt zu werden, so daß ein Siebvorgang ermöglicht wird.

Druckschrift DE3426436A1 zeigt eine Kombination von tangierenden und ineinandergreifenden Systemen.
Weiterhin wird in der Patentschrift EP-A- 165 218 eine Vorrichtung zur Bearbeitung von Elastomeren beschrieben gemäß dem einleitenden Teil des Anspruchs 1.

Der Erfindung liegt das Problem zugrunde einen Extruder mit einem Mischeffekt so zu gestalten, daß das Material homogenisiert wird und vermischt aus der Austrittsdüse mit einer vorbestimmten Temperatur austritt.
Dieses Problem wird erfindungsgemäß durch die Merkmale des Patentanspruchs 1 gelöst.

**Der erfindungsgemäße Extrusionskopf mit Mischeinrichtung und einstellbarem Schereffekt hat folgende Vorteile:**
Einstellbarer Mischeffekt der jeweiligen Mischung angepaßt und
schonendes Homogenisieren , bedingt durch Scherung ,und keine thermische Belastung durch Reibung beim Extrudieren

Durch die optimale Homogenisierung ergibt sich ein gleichmäßiger Mischungsaustrag. Die Maßhaltigkeit der Extrusionsprodukte wird bei schwierigen Mischungen erheblich verbessert.

Durch den variablen Antrieb des Rotors ist bei Elastomeren eine Anvulkanisation zu erreichen.

Die Extruderbaulänge kann verkürzt werden.

Energie- und Investitionskosten verringern sich.

**Die Erfindung läßt zahlreiche Ausführungsformen zu.**

Zur weiteren Verdeutlichung ihres Grundprinzips sind zwei davon in den Zeichnungen dargestellt und werden nachfolgend beschrieben:

Die Zeichnung zeigt in
Figur 1 einen Längsschnitt durch einen Extrusionskopf mit innen liegenden Zahnrädern 1 und 2,
Figur 2 einen Querschnitt durch den Extrusionskopf radial zu den Zahnrädern 2 und 6 bzw. 1,
Figur 3 einen Längsschnitt durch den Extrusionskopf mit den innen liegenden Zahnrädern 2 und 6,
Figur 4 eine Ansicht zweier jeweils verzahnter Wellen

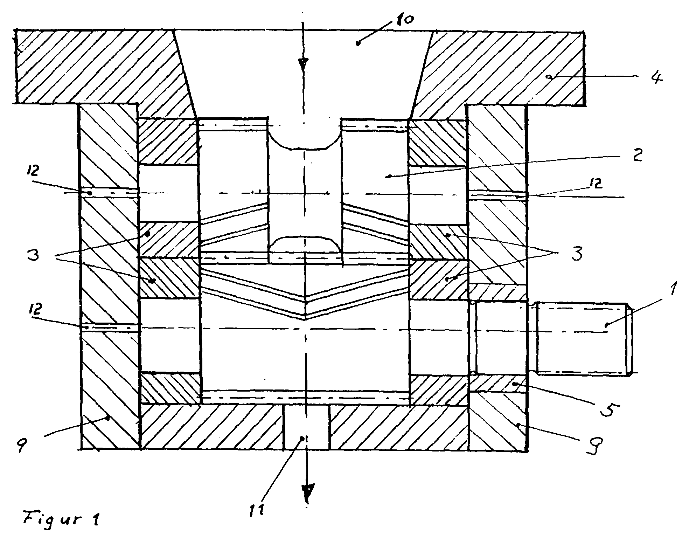

Figur 1 zeigt die übereinander angeordneten Zahnräder 1 und 2 kämmend im Gehäuse gelagert. Das angetriebene Zahnrad 1 weist eine Pfeilverzahnung auf. Das angetriebene Zahnrad 2 ist doppelt schräg verzahnt und hat eine Mittelnut. Die Wellenzapfen der beiden Zahnräder sind in Lagerbuchsen 3 gelagert. Die seitlichen Gehäusedeckel 9 zeigen die Leckstrombohrungen 12 nach außen.

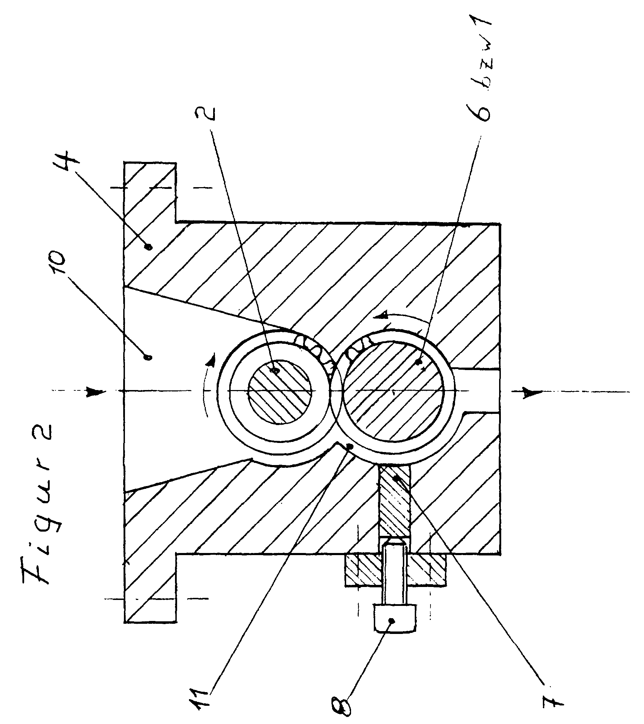

Figur 2 zeigt einen Radialschnitt durch die Mitte der Zahnräder 2 und 6 bzw. 1. Der Damm 7 mit der Einstellschraube 8 reguliert den Materialfluß im Austrittskanal 11.

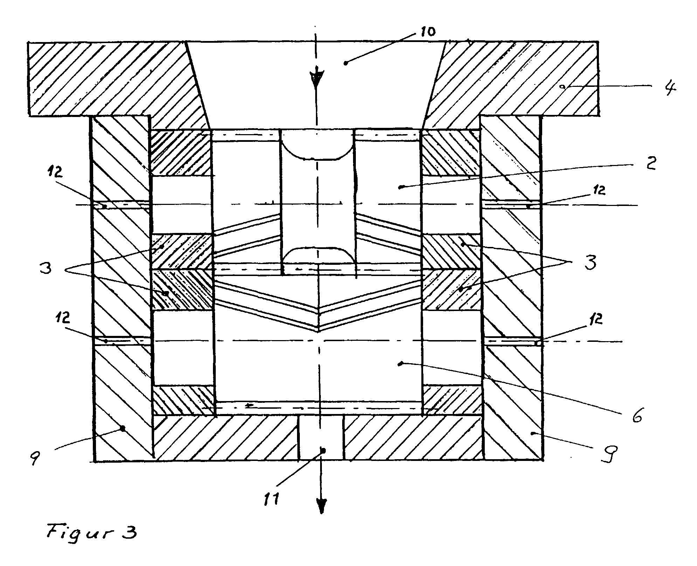

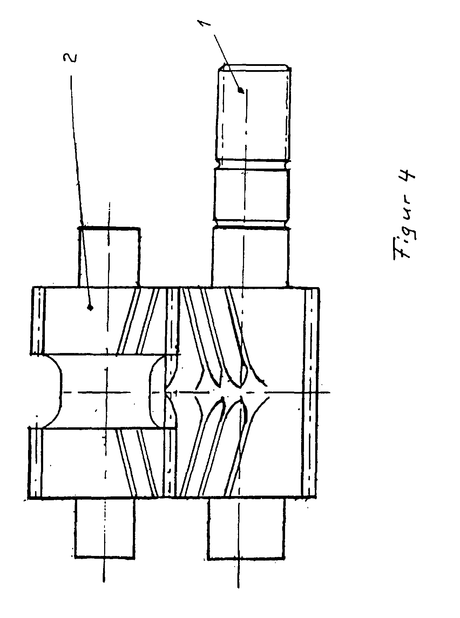

Figur 3 zeigt zwei übereinander angeordnete Zahnräder 2 und 6 kämmend im Gehäuse gelagert. Die Zahnräder werden hier durch den Materialfluß selbständig ins Rotieren gebracht. Figur 4 zeigt kämmende Zahnradwellen. Zahnrad 2 ist doppelt schräg verzahnt und Zahnrad 1 hat eine zur Mitte hin auslaufende Pfeilverzahnung.

Bei dem Extrusionskopf in Figur 3 wird zurückgefördertes Material durch das Zahnrad 6 und Material aus dem Zahnrad 2 axial zur Mitte hin gequetscht und durch die Nut in Zahnrad 2 in den Ausgangskanal 11 (Figur 2) eingemischt.
Durch das axiale Ausquetschen des Materials aus den Zahnlücken von Zahnrad 1 und Zahnrad 2 entsteht eine hohe Fließgeschwindigkeit, die bei hochviskosen Materialien wie Elastomeren , Friktionswärme erzeugt wodurch das Material mit einer erhöhten Temperatur aus dem Extrusionskopf herausgedrückt wird.
Das angetriebene System in Figur 1 kann durch die variable Drehzahl von Zahnrad 1 den Mischeffekt variabel gestalten und somit dem jeweiligen Compound angepaßt werden. Bei hochviskosen Materialien , wie Elastomeren , kann die axiale Fließgeschwindigkeit durch das Ausquetschen der Zahnlücken von Zahnrad 1 und 2 (Figur 1) Friktionswärme erzeugen, so daß eine Anvulkanisation stattfindet und ein formstabiles Produkt aus dem Austrittskanal 11 strömt.
Bedingt durch die Anvulkanisation können nachfolgende Vulkanisationseinrichtungen kostengünstiger gestaltet werden.

### Bezugszeichenliste:

1. angetriebenes pfeilverzahntes Zahnrad
2. doppelt schräg verzahntes Zahnrad mit Mittelnut
3. Lagerbuchsen
4. Aufnahmegehäuse
5. Labyrintbuchse
6. pfeilverzahntes Zahnrad
7. verstellbarer Materialdamm
8. Verstellschraube für Materialdamm
9. seitliche Gehäusedeckel
10. Einlaufkegel
11. Austrittskanal
12. Leckstrombohrungen

## Patentansprüche

1. Einem Extruder nachgeschalteter Extrusionskopf mit Mischeinrichtung und einstellbarem Schereffekt mit zwei übereinander angeordneten kämmenden angetriebenen Zahnrädern, wobei das obere Zahnrad stromaufwärts des Förderstromes angeordnet ist,zum Plastifizieren, Homogenisieren, Mischen und Scheren des zugeführten Materials, wie Polymerschmelzen, Elastomeren und sonstigen mischbaren viskosen und pastösen Stoffen,
**dadurch gekennzeichnet,**
**daß** die Zahnräder (1,2) den Materialstrom zu einer in der Mitte des oberen Zahnrades angeordnten Ringnut sowie zu einem am unteren Zahnrad (1) angeordneten Austrittskanal (11) leiten, wobei in Abhänigkeit von der Drehzahl der Zahnräder (1,2) ein mehr oder weniger großer Teil des zu verarbeiteten Materials durch das untere Zahnrad (6,1) in den Mischungsstrom zurückgeführt wird.

2. Extrusionskopf nach Patentanspruch 1,
**dadurch gekennzeichnet,**
**daß** dem Austrittskanal (11) eine Einstellschraube (8) zur Erzeugung eines Materialdamms (7) und zur Regulierung des Materialflusses im Austrittskanal zugeordnet ist.

3. Extrusionskopf nach mindestens einem der Patentanspüche I oder 2,
**dadurch gekennzeichnet,**
**daß** die Ringnut des oberen Zahnrades (2) in etwa die Breite des Austrittskanals 11 hat.

4. Extrusionskopf nach mindestens einem der Patentansprüche 1 bis 3,
**dadurch gekennzeichnet**,
das untere Zahnrad (1) von außen antreibbar ist, um die Austrittstemperatur durch Friktion zu beeinflussen und eine Anvulkanisation des zu verarbeitenden Materials im Austrittskanai (11) zu erreichen.

5. Extrusionskopf nach Patentanspruch 4,
**dadurch gekennzeichnet,**
**daß** der Antrieb des unteren Zahnrades (1) variabel ist.

6. Extrusionskopf nach mindestens einem der Patentansprüche 1 bis 5,
**dadurch gekennzeichnet,**
**daß** das untere Zahnrad (6 bzw. 1) eine zur Mitte hin auslaufende Pfeilverzahnung und das obere Zahnrad (2) eine doppelte Schrägverzahnung mit mittig vorgesehener Ringnut aufweist.

7. Extrusionskopf nach mindestens einem der Patentansprüche 1 bis 6,
**dadurch gekennzeichnet**
**daß** die Zahnradlager (3) produktgeschmiert und in einer Deckplatte (9) mindestens eine Leckstrombohrung (12) zur Abführung von Material oder dessen Rückführung in den Materialstrom vorgesehen ist.

## Claims

1. An extrusion head fitted to an extruder or other extrusion device, with mixing device and adjustable shear effect; with two driven toothed wheels arranged one over the other and the upper toothed wheel arranged upstream of the extrusion flow, said extrusion head being suitable for plasticizing, homogenizing, mixing and shearing of material conveyed to it, such as polymer melts, elastomers and other miscible and paste materials,
**characterized in that**
the toothed wheels (1, 2) convey the material flow to a ring groove arranged in the center of the upper toothed wheel as well as to an outlet channel arranged at the lower toothed wheel (1), in such way that depending on the speed of the toothed wheels (1, 2), more or less of the material to be processed is lead back through the lower toothed wheel (6, 1) to the material flow.

2. An extrusion head according to claim 1,
**characterized in that**
the outlet channel (11) is provided with an adjusting screw (8) to produce a material dam (7) and to regulate the material flow in the outlet channel.

3. An extrusion head at least according to one of the claims 1 or 2,
**characterized in that**
the ring groove of the upper toothed wheel (2) has almost the same width as the outlet channel 11.

4. An extrusion head at least according to one of the claims 1 to 3,
**characterized in that**
the lower toothed wheel (1) can be driven from outside in order to influence the exit temperature by friction and in order to achieve a prevulcanization of the material in the outer channel (11).

5. An extrusion head according to claim 4,
**characterized in that**
the lower toothed wheel (1) is provided with a variable drive.

6. An extrusion head at least according to one of the claims 1 to 5,
**characterized in that**
the lower toothed wheel (6 or 1) is provided with a divided double helical gearing and the upper toothed wheel (2) with a double oblique gearing with a ring groove arranged in the center.

7. An extrusion head at least according to one of the claims 1 to 6,
**characterized in that**
the toothed wheel bearings (3) are lubricated by the material. Said extrusion head being provided with a cover plate (9) with at least one leakage flow bore hole (12) to discharge material or lead back said material to the material flow.

## Revendications

1. Tête d'extrusion montée sur une extrudeuse ; avec dispositif de mélangeage et effet de cisaillement réglable ; avec deux roues dentées superposées, entraînées, la roue dentée supérieure située en amont du flux d'extrusion étant destinée à plastifier, homogénéiser, mélanger et cisailler la matière à extruder comme par ex. : des masses de polymères fondus, des élastomères et d'autres matières miscibles, visqueuses et pâteuses,
**caractérisée par le fait que**
les roues dentées (1,2) conduisent le flux de matière jusqu'à une rainure annulaire aménagée dans le centre de la roue dentée supérieure, ainsi que jusqu'à un conduit de sortie (11) disposé sur la roue dentée inférieure (1), de sorte qu'une part plus ou moins importante de la matière à travailler, en fonction du nombre de tours des roues dentées (1,2), est renvoyée par la roue dentée inférieure (6,1) dans le flux de mélange.

2. Tête d'extrusion selon revendication 1,
**caractérisée par le fait que**
le conduit de sortie (11) est pourvu d'une vis de réglage (8) afin de créer un barrage à la matière (7) et de réguler le flux de matière dans le conduit de sortie.

3. Tête d'extrusion selon au moins l'une des revendications 1 ou 2,
**caractérisée par le fait que**
la rainure annulaire de la roue dentée supérieure (2) a une largeur à peu près égale à celle du conduit de sortie 11.

4. Tête d'extrusion selon au moins l'une des revendications 1 à 3,
**caractérisée par le fait que**
la roue dentée inférieure (1) est entraînable de l'extérieur afin d'influencer la température en sortie par friction et d'obtenir une pré vulcanisation de la matière dans le conduit de sortie (11).

5. Tête d'extrusion selon revendication 4,
**caractérisée par le fait que**
l'entraînement de la roue dentée inférieure (1) est variable.

6. Tête d'extrusion selon au moins l'une des revendications 1 à 5,
**caractérisée par le fait que**
la roue dentée inférieure (6 ou 1) présente une denture à chevrons se terminant dans le centre, et la roue dentée supérieure (2) une denture en chevrons coupée au centre par une rainure.

7. Tête d'extrusion selon au moins l'une des revendications 1 à 6,
**caractérisée par le fait que**
les paliers des roues dentées (3) sont lubrifiés par la matière. Les paliers sont couverts par une plaque (9) avec au moins un perçage de drainage (12) permettant l'évacuation de la matière ou son retour dans le flux de la matière.
